# EUROPEAN PATENT SPECIFICATION

(11) **EP 2 443 194 B1**
(45) Date of publication and mention of the grant of the patent: **18.05.2016**
(21) Application number: 10789954.4
(22) Date of filing: 09.06.2010
(51) Int. Cl.: C08L 27/16, C08K 5/14, C08J 3/24, C08F 214/22

(54) **LOW TEMPERATURE CURABLE AMORPHOUS FLUOROPOLYMERS**
NIEDERTEMPERATUR-HÄRTBARE AMORPHE FLUORPOLYMERE
POLYMÈRES FLUORÉS AMORPHES DURCISSABLES À BASSE TEMPÉRATURE

(30) Priority: 19.06.2009 US 218485 P
(43) Date of publication of application: 25.04.2012
(73) Proprietor: 3M Innovative Properties Company, Saint Paul, MN 55133-3427 (US)
(72) Inventor: FUKUSHI, Tatsuo, Saint Paul, MN 55133-3427 (US); WELLNER, Steven, J., Saint Paul, MN 55133-3427 (US)
(74) Representative: Vossius & Partner Patentanwälte Rechtsanwälte mbB
(86) International application number: PCT/US2010/037887
(87) International publication number: WO 2010/147815

(56) References cited:
- WO-A2-2009/036131
- WO-A2-2009/086068
- JP-A- 2009 513 795
- KR-A- 20070 058 592
- US-A1- 5 102 965
- US-B1- 6 503 986
- US-B2- 6 326 436

## Description

The present disclosure relates to curable compositions of amorphous fluoropolymers and a process for creating cured in place articles derived from such compositions. The present disclosure also relates to peroxide curable amorphous fluoropolymer compositions exhibiting fast cure times at low temperatures.

### SUMMARY

In one aspect, the present disclosure provides a composition comprising an amorphous peroxide curable fluoropolymer comprising an iodine, bromine or chlorine containing cure site, an organic peroxide with a 10-hour half life temperature below 90°C, and a coagent, where the amorphous fluoropolymer has a storage modulus at 25°C and 0.1 rad/s of less than or equal to 300 kPa, and also where the fluoropolymer 90% cure time as measured by sealed torsion shear rotorless curemeter in ASTM D5289-07 is less than 30 minutes at 110°C.

In another aspect, the present disclosure provides a fluoroelastomer preparable by providing a composition comprising: (i) an amorphous peroxide curable fluoropolymer comprising an iodine, bromine or chlorine containing cure site, where the amorphous peroxide curable fluoropolymer has a storage modulus at 25°C and 0.1 rad/s of less than or equal to 300 kPa, and (ii) an organic peroxide with a 10-hour half life temperature below 90°C; providing a coagent; and curing the composition at 110°C for less than 30 minutes, where the fluoropolymer 90% cure time as measured by sealed torsion shear rotorless curemeter in ASTM D5289-07 is less than 30 minutes at 110°C.

In yet another aspect, the present disclosure provides a cure in place process comprising the steps of: providing a substrate; positioning on the substrate a composition comprising: (i) an amorphous peroxide curable fluoropolymer comprising an iodine, bromine or chlorine containing cure site, where the amorphous peroxide curable fluoropolymer has a storage modulus at 25°C and 0.1 rad/s of less than or equal to 300 kPa, (ii) an organic peroxide with a 10-hour half life temperature below 90°C, and (iii) a coagent; and (c)curing the composition at 110°C for less than 30 minutes, where the fluoropolymer 90% cure time as measured by sealed torsion shear rotorless curemeter in ASTM D5289-07 is less than 30 minutes at 110°C.

In still another aspect, the present disclosure provides a cure in place article derived from a composition comprising: an amorphous peroxide curable fluoropolymer comprising an iodine, bromine or chlorine containing cure site; an organic peroxide with a 10-hour half life temperature below 90°C; and a coagent, where the fluoropolymer 90% cure time as measured by sealed torsion shear rotorless curemeter in ASTM D5289-07 is less than 30 minutes at 110°C.

Following are exemplary embodiments of the present disclosure:
1. A composition comprising:
   (a) an amorphous peroxide curable fluoropolymer comprising an iodine, bromine or chlorine containing cure site;
   (b) an organic peroxide with a 10-hour half life temperature below 90°C; and
   (c) a coagent,
   wherein the amorphous fluoropolymer has a storage modulus at 25°C and 0.1 rad/s of less than or equal to 300 kPa,
   wherein the fluoropolymer 90% cure time as measured by sealed torsion shear rotorless curemeter in ASTM D5289-07 is less than 30 minutes at 110°C.
2. The composition according to claim 1 wherein the amorphous fluoropolymer has a storage modulus at 25°C and 0.1 rad/s of greater than or equal to 100 kPa.
3. The composition according to claim 1 wherein the fluoropolymer comprises interpolymerized units derived from the group consisting of tetrafluoroethylene, vinylidene fluoride, hexafluoropropylene, ethylene, propylene, perfluoro(alkylvinylether), perfluoro(allylether), chlorotrifluoroethylene, vinylfluoride and trifluoroethylene.
4. The composition according to claim 1 wherein the organic peroxide is present at 0.1 phr to 5 phr.
5. The composition according to claim 1 wherein the coagent is selected from tri(methyl)allyl isocyanurate (TMAIC), triallyl isocyanurate (TAIC), tri(methyl)allyl cyanurate, poly-triallyl isocyanurate (poly-TAIC), xylylene-bis(diallyl isocyanurate) (XBD), N,N'-m-phenylene bismaleimide, diallyl phthalate, tris(diallylamine)-s-triazine, triallyl phosphite, 1,2-polybutadiene, ethyleneglycol diacrylate, diethyleneglycol diacrylate, and compounds having the formula CH₂=CH-R_{f1}-CH=CH₂, wherein R_{f1} may be a perfluoroalkylene of 1 to 8 carbon atoms.
6. The composition according to claim 1 wherein composition comprises 1 wt% to 10 wt% of the coagent.
7. The composition according to claim 1 wherein the organic peroxide is selected from t-hexyl peroxy-2-ethylhexanoate, t-butyl peroxy-2-ethylhexanoate, di(4-methylbenzoyl) peroxide, benzoyl peroxide, and combinations thereof.
8. The composition according to claim 1 wherein the cure site is an end group.
9. The composition according to claim 1 wherein the weight percent of iodine, bromine or chlorine ranges from 0.2 to 2.
10. The composition of claim 1 wherein the iodine is derived from an iodinated chain transfer agent.
11. The composition of claim 1 wherein the bromine is derived from a brominated chain transfer agent.
12. The composition of claim 1 wherein the chlorine is derived from a chlorinated chain transfer agent.
13. The composition of claim 10 wherein the chain transfer agent is a perfluorinated iodo-compound.
14. The composition of claim 11 wherein the chain transfer agent is a perfluorinated bromo-compound.
15. The composition of claim 12 wherein the chain transfer agent is a perfluorinated chloro-compound.
16. The composition of claim 1 wherein the fluoropolymer has a Mooney viscosity of 12 or less (ML 1+10) at 100°C according to ASTM D1646-06 TYPE A.
17. A cure in place process comprising the steps of:
   (a) providing a substrate;
   (b) positioning on the substrate a composition according to claim 1; and
   (c) curing the composition, wherein the fluoropolymer 90% cure time as measured by sealed torsion shear rotorless curemeter in ASTM D5289-07 is less than 30 minutes at 110°C.
19. A cure in place article derived from a composition according to claim 1.

The above summary of the present disclosure is not intended to describe each embodiment of the present invention. The details of one or more embodiments of the invention are also set forth in the description below. Other features, objects, and advantages of the invention will be apparent from the description and from the claims.

### DETAILED DESCRIPTION

Curing temperatures for amorphous fluoropolymers or fluoroelastomers is generally higher than curing temperatures for non-fluorocarbon elastomers, such as silicone elastomers. Curing temperatures for amorphous fluoropolymers or fluoroelastomers generally range from about 160°C to about 180°C. Because of the high temperatures required to cure amorphous fluoropolymers, compounds containing amorphous fluoropolymers are difficult to mold or process with other plastics or other types of elastomers.

Peroxide curable fluoroelastomers having iodine cure sites or iodine end groups are generally known. The cure speed of a fluoroelastomer with an iodine cure site or iodine end groups is faster than that of fluoroelastomer with a bromine cure site or bromine end groups. Those skilled in the art appreciate that 2,5-dimethyl-2,5-di(t-butylperoxy)-hexane (DBPH) peroxide has been widely used as the standard peroxide for peroxide curable fluoroelastomer with an iodine cure site since the 1970's. Still other known peroxides used to prepare peroxide curable fluoroelastomers include 2,5-dimethyl-2,5-di(t-butylperoxy)-hexane (DBPH), di(2-t-butylperoxyisopropyl)benzene and dicumyl peroxide. However, the presently known peroxide cure systems do not provide rapid curing at low temperatures.

WO 2009/086068 A2 relates to a composition having an amorphous peroxide curable fluoropolymer with an iodine, bromine or chlorine containing cure site; an organic peroxide; and a coagent, where the fluoropolymer 90% cure time as measured by sealed torsion shear rotorless curemeter in ASTM D5289-07 is less than 30 minutes at 130°C. The document mentions curing agents having a 10-hour half-life temperature of 90°C or more.

The present disclosure provides compositions of amorphous fluoropolymers that can be quickly cured at low temperatures without compromising physical properties of articles derived from these compositions. These amorphous fluoropolymers may also exhibit low viscosities, which can be useful in milling and molding applications and cure in place applications. The presently disclosed compositions may also include one or more conventional adjuvants, such as, for example, fillers, acid acceptors, process aids, or colorants.

The fluoropolymers presently disclosed may include one or more interpolymerized units derived from at least two principal monomers. Examples of suitable candidates for the principal monomer(s) include perfluoroolefins (e.g., tetrafluoroethylene (TFE) and hexafluoropropylene (HFP)), perfluorovinyl ethers (e.g., perfluoroalkyl vinyl ethers (PAVE) and perfluoroalkoxy vinyl ethers (PAOVE)) and hydrogen-containing monomers such as olefins (e.g., ethylene, propylene) and vinylidene fluoride (VDF). Such fluoropolymers include, for example, fluoroelastomer gums.

Those skilled in the art are capable of selecting specific interpolymerized units at appropriate amounts to form an elastomeric polymer Thus, the appropriate level of interpolymerized units based on mole%, are selected to achieve an elastomeric, polymeric composition.

When the fluoropolymer is perhalogenated, preferably perfluorinated, it contains at least 50 mole percent (mol %) of its interpolymerized units derived from TFE and/or CTFE, optionally including HFP. The balance of the interpolymerized units of the fluoropolymer (10 to 50 mol %) is made up of one or more perfluoroalkyl vinyl ethers (PAVE) and/or perfluoroalkoxy vinyl ethers (PAOVE), and a suitable cure site monomer. An exemplary fluoropolymer is composed of principal monomer units of TFE and at least one perfluoroalkyl vinyl ether. In such copolymers, the copolymerized perfluorinated ether units constitute from about 10 to about 50 mol %, and preferably from about 15 to about 35 mol % of total monomer units present in the polymer.

When the fluoropolymer is not perfluorinated, it contains from about 5 mol % to about 90 mol % of its interpolymerized units derived from TFE, CTFE, and/or HFP, from about 5 mol % to about 90 mol % of its interpolymerized units derived from VDF, ethylene, and/or propylene, up to about 40 mol % of its interpolymerized units derived from a vinyl ether, and from about 0.1 mol % to about 5 mol %, and preferably from about 0.3 mol % to about 2 mol %, of a suitable cure site monomer.

Suitable perfluorinated ethers include those of the formula: CF₂₌CFO-(CF₂)ₘ-(O(CF₂)p)ₙ-OR_{f} (Formula 1) wherein R_{f} is a perfluorinated (C1-C4) alkyl group, m=1-4, n=0-6, and p=1-2, or CF₂=CF(CF2)ₘ-O-R_{f} (Formula 2) wherein: m=1-4; R_{f} is a perfluorinated aliphatic group optionally containing O atoms. These perfluorinated ethers may be pre-emulsified with an emulsifier prior to its copolymerization with the other comonomers. Exemplary perfluoroalkoxy vinyl ethers include CF₂=CFOCF₂OCF₃, CF₂=CFOCF₂OCF₂CF₃, CF₂=CFOCF₂CF₂OCF₃, CF₂=CFOCF₂CF₂CF₂OCF₃, CF₂=CFOCF₂CF₂CF₂, CF₂OCF₃; CF₂=CFOCF₂OCF₂CF₃, CF₂=CFOCF₂ CF₂OCF₂CF₃, CF₂=CFOCF₂ CF₂CF₂OCF₂CF₃, CF₂=CFOCF₂CF₂CF₂ CF₂OCF₂CF₃, CF₂=CFOCF₂CF₂OCF₂OCF₃. CF₂=CFOCF₂CF₂OCF₂CF₂OCF, CF₂=CFOCF₂CF₂OCF₂CF₂CF₂OCF₃, CF₂=CFOCF₂CF₂OCF₂CF₂CF₂CF₂OCF₃, CF₂=CFOCF₂CF₂OCF₂CF₂CF₂CF₂CF₂OCF₃, CF₂=CFOCF₂CF₂(OCF₂)₃OCF₃, CF₂=CFOCF₂CF₂(OCF₂)₄OCF_{3,} CF₂=CFOCF₂CF₂OCF₂OCF₂OCF₃, CF₂=CFOCF₂CF₂OCF₂CF₂CF₃ and CF₂=CFOCF₂CF₂OCF₂CF₂OCF₂CF₂CF₃. Mixtures of perfluoroalkyl vinyl ethers (PAVE) and perfluoroalkoxy vinyl ethers (PAOVE) may also be employed. Perfluoroolefins useful in the present disclosure include those of the formula: CF₂=CF--R_{f}, where R_{f} is fluorine or a perfluoroalkyl of 1 to 8, preferably 1 to 3, carbon atoms.

Exemplary perfluoroalkoxy allyl ethers include CF₂=CFCF₂OCF₂CF₂OCF₃, CF₂=CFCF₂OCF₂CF2 CF₂OCF₂ and CF₂=CFCF₂OCF₂OCF₃.

In some embodiments, partially-fluorinated monomers or hydrogen-containing monomers such as olefins (e.g., ethylene, propylene, and the like), and vinylidene fluoride can be used in the fluoropolymer. An exemplary partially fluorinated polymer includes principal monomer units of TFE and propylene, such as the polymer available under the trade designation "AFLAS" (Asahi Glass Co. Ltd., Tokyo, Japan). Another exemplary partially fluorinated terpolymer having principal monomer units of tetrafluoroethylene, propylene and vinylidene fluoride, such as the polymer available under the trade designation "BRE 7231X" (Dyneon LLC, Minnesota, USA).

The amorphous fluoropolymer presently disclosed is created by a sequence of steps, including polymerization, coagulation/drying, milling, compounding, pre-forming, and curing/molding. In one embodiment, an aqueous emulsion polymerization can be carried out continuously under steady-state conditions. In this embodiment, for example, an aqueous emulsion of the perfluoro ethers of Formulas (1) and (2) as previously disclosed, and the other monomers, water, emulsifiers, buffers and catalysts are fed continuously to a stirred reactor under optimum pressure and temperature conditions while the resulting emulsion or suspension is continuously removed. In some embodiments, batch or semibatch polymerization is conducted by feeding the aforementioned ingredients into a stirred reactor and allowing them to react at a set temperature for a specified length of time or by charging ingredients into the reactor and feeding the monomers into the reactor to maintain a constant pressure until a desired amount of polymer is formed. After polymerization, unreacted monomers are removed from the reactor effluent latex by vaporization at reduced pressure. Polymer is recovered from the latex by coagulation.

The polymerization is generally conducted in the presence of a free radical initiator system, such as ammonium persulfate. The polymerization reaction may further include other components such as chain transfer agents and complexing agents. The polymerization is generally carried out at a temperature between 10°C and 100°C, and preferably between 30°C and 80°C. The polymerization pressure is usually in the range of 0.3 MPa to 30 MPa, and in some embodiments in the range of 2 MPa and 20 MPa.

When conducting emulsion polymerization, perfluorinated, partially fluorinated, APFO (ammonium perfluorooctanate) free emulsifiers may be used, in addition to emulsifier-free polymerization. Generally these fluorinated emulsifiers comprise from about 0.02% to about 3% by weight with respect to the polymer. Polymer particles produced with a fluorinated emulsifier typically have an average diameter, as determined by dynamic light scattering techniques, in range of about 10 nm to about 300 nm, and in some embodiments in range of about 50 nm to about 200 nm.

Such fluorinated and partially fluorinated emulsifiers include those commonly used in emulsion polymerization of fluorine containing monomers. Examples of such emulsifier include fluoroalkyl, preferably perfluoroalkyl, carboxylic acids and salts thereof having 6-20 carbon atoms, preferably 6-12 carbon atoms, such as ammonium perfluorooctanoate (APFO) and ammonium perfluorononanoate. (See, e.g. U.S. Pat. No. 2,559,752 to Berry).

Additional examples of such emulsifiers also include perfluorinated and partially fluorinated emulsifier having the formula [R_{f}-O-L-COO⁻]ᵢXⁱ⁺ wherein L represents a linear partially or fully fluorinated alkylene group or an aliphatic hydrocarbon group, R_{f} represents a linear partially or fully fluorinated aliphatic group or a linear partially or fully fluorinated aliphatic group interrupted with one or more oxygen atoms, Xⁱ⁺ represents a cation having the valence i and i is 1, 2 or 3. (See, e.g. U.S. Pat. No. 2007/0015864 to Hinzter et al.).

Additional examples of such emulsifiers also include perfluorinated polyether emulsifiers having the formula (1) or (II), where CF₃-(OCF₂)ₘ-O-CF₂-X (I) wherein m has a value of 1 to 6 and X represents a carboxylic acid group or salt thereof, CF₃-O-(CF₂)₃-(OCF(CF₃)-CF₂)_{z}-O-L-Y (II) wherein z has a value of 0, 1, 2 or 3, L represents a divalent linking group selected from-CF(CF₃)-,-CF₂-and-CF ₂CF₂-and Y represents a carboxylic acid group or salt thereof. (See, e.g. U.S. Pat. Publ. No. 2007/0015865 to Hintzer et al.).

Further examples of such emulsifiers include perfluorinated polyether emulsifiers having the formula R_{f}-O(CF₂CF₂O)ₘCF₂COOA wherein R_{f} is CₙF₍₂ₙ₊ᵢ₎; where n = 1-4, A is a hydrogen atom, an alkali metal or NH₄, and m is an integer of from 1 to 3. (See, e.g. U.S. Pat. No. 2006/0199898 to Funaki; Hiroshi et al.). Additional examples of such emulsifiers also include perfluorinated emulsifiers having the formula F(CF₂)ₙO(CF₂CF₂O)ₘCF₂ COOA wherein A is a hydrogen atom, an alkali metal or NH₄, n is an integer of from 3 to 10, and m is 0 or an integer of from 1 to 3. (See, e.g. U.S. Pat. Publ. No. 2007/0117915 to Funaki; Hiroshi et al.).

Additional examples of such emulsifiers include fluorinated polyether emulsifiers as described in U.S. Pat. No. 6,429,258 to Morgan et al. and perfluorinated or partially fluorinated alkoxy acids and salts thereof wherein the perfluoroalkyl component of the perfluoroalkoxy has 4-12 carbon atoms, preferably 7-12 carbon atoms. (See, e.g. U.S. Pat. No. 4,621,116 to Morgan).

Other exemplary emulsifiers include partially fluorinated polyether emulsifiers having the formula [R_{f}-(O)ₜ-CHF-(CF2)ₙ-COO-]ᵢXⁱ⁺ wherein R_{f} represents a partially or fully fluorinated aliphatic group optionally interrupted with one or more oxygen atoms, t is 0 or 1 and n is 0 or 1, Xⁱ⁺ represents a cation having a valence i and i is 1, 2 or 3. (See, e.g. U.S. Pat. Publ. No. 2007/0142541 to Hintzer et al.).

More exemplary emulsifiers include perfluorinated or partially fluorinated ether containing emulsifiers as described in U.S. Pat. Publ. Nos. 2006/0223924 to Tsuda; Nobuhiko et al., 2007/0060699 to Tsuda; Nobuhiko et al, 2007/0142513 to Tsuda; Nobuhiko et al and 2006/0281946 to Morita; Shigeru et al.

The perfluorinated, partially fluorinated and/or APFO (ammonium perfluorooctanate) free emulsifiers can be removed or recycled from the fluoropolymers latex as described in U.S. Pat. Nos. 5,442,097 to Obermeier et al., 6,613,941 to Felix et al., 6,794,550 to Hintzer et al., 6,706,193 to Burkard et al. and 7,018,541 Hintzer et al.

In some embodiments, the polymerization process may be conducted with no fluorinated emulsifiers. Polymer particles produced without an emulsifier typically have an average diameter, as determined by dynamic light scattering techniques, in a range of about 40 nm to about 500 nm, typically in range of about 100 nm and about 400 nm, whereas suspension polymerization will typically produce particles sizes up to several millimeters.

In some embodiments, liquid perfluoro ethers of Formula 1 and/or Formula 2 as previously disclosed can be pre-emulsified in water with the aid of a fluorinated emulsifier prior to copolymerization with gaseous fluorinated monomers. The pre-emulsification of the liquid fluorinated monomer preferably results in an emulsion having monomer droplets having a diameter of about 1 micrometer or more, with an expected range of about 1 micrometer to 20 micrometer as described in U.S. Pat. No. 6,677,414.

In some embodiments, a water soluble initiator can be used to start the polymerization process. Salts of peroxy sulfuric acid, such as ammonium persulfate, are typically applied either.alone or sometimes in the presence of a reducing agent, such as bisulfites or sulfinates (disclosed in U.S. Pat. Nos. 5,285,002 Grootaert and 5,378,782 to Grootaert) or the sodium salt of hydroxy methane sulfinic acid (sold under the trade designation "RONGALIT", BASF Chemical Company, New Jersey, USA). Most of these initiators and the emulsifiers have an optimum pH-range where they show most efficiency. For this reason, sometimes buffers are used in some embodiments. Buffers include phosphate, acetate or carbonate buffers or any other acid or base, such as ammonia or alkali metal hydroxides. The concentration range for the initiators and buffers can vary from 0.01% to 5% by weight based on the aqueous polymerization medium.

At least one of the presently disclosed fluoropolymers has an effective amount of cure sites, such that it has a Mooney viscosity of 12 or less (ML 1+10) at 100°C according to ASTM D1646-06 TYPE A. The end groups can be iodine, bromine or chlorine end groups chemically bonded to chain ends of at least one of the fluoropolymers. The weight percent of iodine, bromine or chlorine may range from about 0.2 wt.% to about 2 wt.%, and preferably from about 0.3 wt.% to about 1 wt.%.

In the present disclosure, any one of an iodo-chain transfer agent, a bromo-chain transfer agent or a chloro-chain transfer agent can be used in the polymerization process. For example, suitable iodo-chain transfer agent in the polymerization include the formula of RIₓ, where (i) R is a perfluoroalkyl or chloroperfluoroalkyl group having 3 to 12 carbon atoms; and (ii) x = 1 or 2. The iodo-chain transfer agent may be a perfluorinated iodo-compound. Exemplary iodo-perfluoro-compounds include 1,3-diiodoperfluoropropane, 1,4-diiodoperfluorobutane, 1, 6-diiodoperfluorohexane, 1,8-diiodoperfluorooctane, 1,10-diiodoperfluorodecane, 1,12-diiodoperfluorododecane, 2-iodo-1,2-dichloro-1,1,2-trifluoroethane, 4-iodo-1,2,4-trichloroperfluorobutan and mixtures thereof. In some embodiments, the bromine is derived from a brominated chain transfer agent of the formula: RBrₓ, where (i) R is a perfluoroalkyl or chloroperfluoroalkyl group having 3 to 12 carbon atoms; and (ii) x = 1 or 2. The chain transfer agent may be a perfluorinated bromo-compound.

The cure site monomers are derived from one or more compounds of the formula: a) CX₂=CX(Z), wherein: (i) X each is independently H or F ; and (ii) Z is I, Br, R*_{f}*-U wherein U=I or Br and R*_{f}*=a perfluorinated or partially perfluorinated alkylene group optionally containing O atoms. In addition, non-fluorinated bromo-or iodo-olefins, e.g., vinyl iodide and allyl iodide, can be used. In some embodiments, the cure site monomers are derived from one or more compounds selected from the group consisting of CH₂=CHI, CF₂=CHI, CF₂=CFI, CH₂=CHCH₂I, CF₂=CFCF₂I, CH₂=CHCF₂CF₂I, CF₂=CFCH₂CH₂I, CF₂=CFCF₂CF₂I, CH₂=CH(CF₂)₆CH₂CH₂I, CF₂=CFOCF₂CF₂I, CF₂=CFOCF₂CF₂CF₂I, CF₂=CFOCF₂CF₂CH₂I, CF₂=CFCF₂OCH₂CH₂I, CF₂=CFO(CF₂)₃-OCF₂CF₂I, CH₂=CHBr, CF₂=CHBr, CF₂=CFBr, CH₂=CHCH₂Br, CF₂=CFCF₂Br, CH₂=CHCF₂CF₂Br, CF₂=CFOCF₂CF₂Br, CF₂=CFCl, CF₂=CFCF₂Cl and mixtures thereof.

The chain transfer agents and/or the cure site monomers can be fed into the reactor by batch charge or continuously feeding. Because feed amount of chain transfer agent and/or cure site monomer is relatively small compared to the monomer feeds, continuous feeding of small amounts of chain transfer agent and/or cure site monomer into the reactor is difficult to control. Continuous feeding can be achieved by a blend of the iodo-chain transfer agent in one or more monomers. Exemplary monomers for such a blend include but are not limited to hexafluoropropylene (HFP) and perfluoromethyl vinyl ether (PMVE).

To coagulate the obtained fluoropolymer latex, any coagulant which is commonly used for coagulation of a fluoropolymer latex may be used, and it may, for example, be a water soluble salt such as calcium chloride, magnesium chloride, aluminum chloride or aluminum nitrate, an acid such as nitric acid, hydrochloric acid or sulfuric acid, or a water soluble organic liquid such as an alcohol or acetone. The amount of the coagulant to be added is preferably in range of 0.001 to 20 parts by mass, particularly preferably in a range of 0.01 to 1.0 parts by mass per 100 parts by mass of the fluorinated elastomer latex. Further, the fluorinated elastomer latex may be frozen for coagulation.

The coagulated fluorinated elastomer is preferably collected by filtration and washed with washing water. The washing water may, for example, be ion exchanged water, pure water or ultrapure water. The amount of the washing water may be from 1 to 5 times by mass to the fluorinated elastomer, whereby the amount of the emulsifier attached to the fluorinated elastomer can be sufficiently reduced by one washing.

Peroxide cure fluoroelastomers require a compounding process to add co-agents, peroxides and fillers such as carbon black. The typical compounding process is to use a two-roll mill. If the viscosity of raw or compounded gum is too low, raw or compounded gum will stick to the mill and it will be difficult to process. Surprisingly, fluoroelastomers of this invention don't stick to a roll mill significantly during compounding.

In some embodiments, the crosslinkable fluoropolymer composition can be compounded with the curable component or mixed in one or several steps, using any of the usual rubber mixing devices such as internal mixers (e.g., Banbury mixers) and roll mills. For best results, the temperature of the mixture should not rise above about 50°C. During mixing it is necessary to distribute the components and additives uniformly throughout for effective cure.

The fluoroelastomer compositions can be used to form articles. The term "article" as used herein means a final article, such as an O-ring, and/or preforms from which a final shape is made, e.g. an extruded tube from which a ring is cut. To form an article, the fluoroelastomer composition can be extruded using a screw type extruder or a piston extruder. The uncured extruded or pre-formed elastomers can be cured in an oven at ambient pressure. Typical oven temperature is 70°C to 150°C and time is 10 minutes to 24 hours depending on parts thickness. Alternatively, the fluoroelastomer composition can be shaped into an article using injection molding, transfer molding or compression molding. Surprisingly, the presently disclosed fluoroelastomer composition can also be cured in place.

The fluoroelastomer compositions can also be used for robotic dispensing to prepare cure-in-place gaskets (CIPG) or form-in-place gaskets (FIPG). A bead or thread of the fluoroelastomer composition can be deposited from a nozzle onto a substrates surface. After forming to a desired gasket pattern, the elastomer thread may be cured in place with a heat. Also the uncured elastomer can be cured in an oven at ambient pressure.

The fluoroelastomer compositions can also be used to prepare solutions, which can be used to prepare cured and/or uncured coatings. Substrates that can be coated with these coatings include, but are not limited to, metals, glass, fabrics, polymers, and the like. The solid content can be as high as 80% and the fluoroelastomer can dissolve in solvents including ketones such as acetone, methyl ethyl ketone (MEK) or esters such as methyl acetate and ethyl acetate. Methanol also can be used as the solvent.

For coating applications, an aqueous dispersion of the fluoropolymer mixed with the peroxides and co-agents is desired and hence the fluoropolymer will not need to be separated or coagulated from the dispersion. To obtain a fluoropolymer dispersion suitable for use in coating applications such as, for example, in the impregnation of fabrics or in the coating of metal substrates to make for example cookware, it will generally be desired to add further stabilizing surfactants and/or to further increase the fluoropolymer solids. For example, non-ionic stabilizing surfactants may be added to the fluoropolymer dispersion. Typically these will be added thereto in an amount of 1 to 12 % by weight based on fluoropolymer solids. Exemplary non-ionic surfactants include those according to formula listed below:

R1-O-[CH₂CH₂O]n-[R2O]m-R3

wherein R1 represents an aromatic or aliphatic hydrocarbon group having at least 8 carbon atoms, R2 represents an alkylene having 3 carbon atoms, R3 represents hydrogen or a C1-C3 alkyl group, n has a value of 0 to 40, m has a value of 0 to 40 and the sum of n+m being at least 2. It will be understood that in the above formula, the units indexed by n and m may appear as blocks or they may be present in an alternating or random configuration. Examples of non-ionic surfactants according to formula above include alkylphenol ethoxylates such as ethoxylated p-isooctylphenol commercially available under the trade designation "TRITON" such as for example those available under the trade designation "TRITON X 100" wherein the number of ethoxy units is about 10 or the trade designation "TRITON X 114" wherein the number of ethoxy units is about 7 to 8. Still further examples include those in which R1 in the above formula represents an alkyl group of 4 to 20 carbon atoms, m is 0 and R3 is hydrogen. An example thereof includes isotridecanol ethoxylated with about 8 ethoxy groups and which is commercially available under the trade designation "GENAPOL X080" from Clariant GmbH. Non-ionic surfactants according to the above formula in which the hydrophilic part comprises a block-copolymer of ethoxy groups and propoxy groups may be used as well. Such non-ionic surfactants are commercially available from Clariant GmbH under the trade designation "GENAPOL PF 40" and "GENAPOL PF 80".

The amount of fluoropolymer solids in the dispersion may be upconcentrated as needed or desired to an amount between 30 and 70% by weight. Any of the known upconcentration techniques may be used including ultrafiltration and thermal upconcentration.

Uncured elastomers can be molded using any one of a number of techniques. In some embodiments, uncured elastomers are compression molded by placing a quantity of cold uncured elastomer mixture into a heated mold cavity and subsequently closing the mold using adequate pressure to shape the article. After retaining the elastomer at sufficient temperature during sufficient time to allow vulcanization to proceed it can then be demolded.

In some embodiments, uncured elastomers are injection molded by first heating and masticating elastomer mixtures in an extruder screw and then collecting the elastomer mixtures in a heated chamber from which they are injected into a hollow mold cavity by means of a hydraulic piston. After vulcanization the article can then be demolded.

Advantages of injection molding process include short molding cycles, little or no preform preparation, little or no flash to remove, and low scrap rate. If the compound viscosity is low, the cylinder, barrel and screw temperature can be low and there is less risk to scorch during the flow into the mold. Also low compound viscosity can improve fill or injection time. Typical mold temperature is 120°C to 220°C and heating or molding time is 20 seconds to 3 minutes depending on parts thickness.

In some embodiments, the elastomer mixtures are transfer molded. Transfer molding is similar to injection molding with the difference being that the elastomer mixture is not preheated and masticated by an extruder screw but introduced as a cold mass in the heated injection chamber. Typical curing conditions for fluoroelastomer mixtures are elevated temperatures e.g. about 120°C to about 220°C, pressures above 7 bar and maintaining these conditions for 30 seconds, in fast injection molding processes to 5 minutes or longer for larger compression molded articles.

Pressing of the compounded mixture (i.e., press cure) is typically conducted at a temperature of about 70 to 190°C, preferably about 110 to 150°C, for a period of about 0.5 minutes to about 15 hours, usually for about 1 to 15 minutes. A pressure of about 700 to 20,000 kPa, preferably about 3400 to about 6800 kPa, is typically used in molding the composition. The molded vulcanizate can be used as an article without additional cure (no post cure). The molds first may be coated with a release agent and prebaked.

Typical molded vulcanizate can be post cured in an oven at a temperature of about 120-300°C, preferably at a temperature of about 150-250°C, for a period of about 30 minutes to about 24 hours or more, depending on the type of polymer used and the cross-sectional thickness of the sample.

The amorphous fluoropolymer compound also includes a curing agent that enables vulcanization of the fluoropolymer. The presently disclosed curing agent includes curable materials, such as, for example, peroxide and one or more co-agents. Presently disclosed peroxide curatives include organic peroxides. Exemplary organic peroxides include low temperature active peroxides having a ten-hour half-life temperature less than 90°C. In some embodiments, the low temperature active peroxides have a ten-hour half-life temperature greater than 40°C. Further non-limiting examples of organic peroxides include t-hexyl peroxy-2-ethylhexanoate, t-butyl peroxy-2-ethylhexanoate, di(4-methylbenzoyl) peroxide, benzoyl peroxide.
The ten-hour half-life temperature in Table 1 is a temperature at which a half amount of the organic peroxide is decomposed within ten hours. If the half life temperature is too low, the risk of compound scorch will be high. The curing speed (90% cure time, t'90) of the fluoroelastomer compound with an organic peroxide, such as for example t-hexyl peroxy-2-ethylhexanoate, t-butyl peroxy-2-ethylhexanoate, di(4-methylbenzoyl) peroxide, benzoyl peroxide, is significantly faster than that of the fluoroelastomers compound with DBPH peroxide. Surprisingly, the ultra low viscosity fluoroelastomer of this invention can be mixed with an organic peroxide, such as for example t-hexyl peroxy-2-ethylhexanoate, t-butyl peroxy-2-ethylhexanoate, di(4-methylbenzoyl) peroxide and benzoyl peroxide, without scorch and the resulting compound can even cure at 110°C in 10 minutes.

**Table 1. 10-hour half life temperature of peroxides**

| Peroxides | CAS RN | 10-hour half life temperature (°C) |
|---|---|---|
| Di(4-*t*-butylcyclohexyl) peroxydicarbonate | 15520-11-3 | 41 |
| Di(2-phenoxyethyl) peroxydicarbonate | 41935-39-1 | 50 |
| Di(2,4-dichlorobenzoyl) peroxide | 133-14-2 | 54 |
| Dilauroyl peroxide | 105-74-8 | 62 |
| Decanoyl peroxide | 762-12-9 | 64 |
| 1,1,3,3-Tetramethylethylbutyl peroxy-2-ethylhexanoate | 22288-43-3 | 65 |
| 2,5-Dimetyl-2,5-di(2-ethylhekanoylperoxy)hexane | 13052-09-0 | 66 |
| Disuccinic acid peroxide | 123-23-9 | 66 |
| *t*-Hexyl peroxy-2-ethylhexanoate | 137791-98-1 | 70 |
| Di(4-metylbenzoyl) peroxide | 895-85-2 | 71 |
| t-Butyl peroxy-2-ethylhexanoate | 3006-82-4 | 72 |
| Benzoyl peroxide | 94-36-0 | 73 |
| 1,1-Di(t-butylperoxy)-2-methylcyclohexane | 147217-40-1 | 83 |
| 1,1-Di(*t*-butylperoxy)-3,3,5-trimethylcyclohexane | 104066-39-9 | 87 |
| t-Butylperoxy 2-ethylhexyl carbonate (TBIC) | 2372-21-6 | 99 |
| Dicumyl peroxide | 80-43-3 | 116 |
| 2,5-Dimethyl-2,5-di(*t*-butylperoxy)hexane (DBPH) | 78-63-7 | 118 |

| | | |
|---|---|---|
| CAS RN: Chemical abstracts service registry numbers | | |

The amount of peroxide curing agent used generally will be in a range of 0.1 to 5, preferably in a range of 1 to 3 parts by weight per 100 parts of fluoropolymer.

In peroxide cure systems, it is often desirable to include a co-agent. Those skilled in the art are capable of selecting conventional co-agents based on desired physical properties. Non-limiting examples of such agents include tri(methyl)allyl isocyanurate (TMAIC), triallyl isocyanurate (TAIC), tri(methyl)allyl cyanurate, poly-triallyl isocyanurate (poly-TAIC), xylyleiie-bis(diallyl isocyanurate) (XBD), N,N'-m-phenylene bismaleimide, diallyl phthalate, tris(diallylamine)-s-triazine, triallyl phosphite, 1,2-polybutadiene, ethyleneglycol diacrylate and diethyleneglycol diacrylate. Another useful co-agent may be represented by the formula CH2=CH=R_{f1}-CH=CH2 wherein R_{f1} may be a perfluoroalkylene of 1 to 8 carbon atoms. Such co-agents provide enhanced mechanical strength to the final cured elastomer. They generally are used in amount of 1 to 10 parts by weight, or preferably 1 to 5 parts by weight, per 100 parts of the fluorocarbon polymer.

Fluoropolymers, in particular VDF containing fluoroelastomers, may be cured using a polyhydroxy curing system. In such instance, it will not be required that the fluoropolymer includes cure site components. The polyhydroxy curing system generally comprises one or more polyhydroxy compounds and one or more organo-onium accelerators. The useful organo-onium compounds typically contain at least one heteroatom, i.e., a non-carbon atom such as N, P, S, O, bonded to organic or inorganic moieties. One useful class of quaternary organo-onium compounds broadly comprises relatively positive and relatively negative ions wherein a phosphorus, arsenic, antimony or nitrogen generally comprises the central atom of the positive ion. The negative ion may be an organic or inorganic anion (e.g., halide, sulfate, acetate, phosphate, phosphonate, hydroxide, alkoxide, phenoxide, bisphenoxide).

Many of the organo-oriium compounds are disclosed. See, for example, U.S. Pat. Nos. 4,233,421 to Worm, 4,912,171 to Grootaert et al., 5,086,123 to Guenthner et al., 5,262,490 to Kolb et al., and 5,929,169 to Jing et al. A class of useful organo-onium compounds includes those having one or more pendent fluorinated alkyl groups. Generally, a most useful class of fluorinated onium compounds id disclosed in U.S. Pat. No. 5,591,804 to Coggio et al.

The polyhydroxy compound may be used in its free or non-salt form or as the anionic portion of a chosen organo-onium accelerator. The crosslinking agent may be any polyhydroxy compounds that function as a crosslinking agent or co-curative for fluoroelastomers, such as those polyhydroxy compounds disclosed in U.S. Pat. Nos. 3,876,654 to Pattison, and 4,233,421 to Worm. One of the most useful polyhydroxy compounds includes aromatic polyphenols such as 4,4'-hexafluoroisopropylidenyl bisphenol, known more commonly as bisphenol AF. The compounds 4,4'-dihydroxydiphenyl sulfone (also known as bisphenol S) and 4,4'-isopropylidenyl bisphenol (also known as bisphenol A) are also widely used in practice.

Fluoropolymers, in particular VDF containing fluoroelastomers, may also be cured using a polyamine curing system. Examples of useful polyamines include N,N'-dicinnamylidene-1,6-hexanediamine, trimethylenediamine, cinnamylidene trimethylenediamine, cinnamylidene ethylenediamine, and cinnamylidene hexamethylenediamine. Examples of useful carbamates are hexamethylenediamine carbamate, bis(4-aminocyclohexyl)methane carbamate, 1,3-diaminopropane monocarbamate, ethylenediamine carbamate and trimethylenediamine carbamate. Usually about 0.1-5 phr of the diamine is used.

Additives such as carbon black, stabilizers, plasticizers, lubricants, fillers, and processing aids typically utilized in fluoropolymer compounding can be incorporated into the compositions, provided they have adequate stability for the intended service conditions. In particular, low temperature performance can be enhanced by incorporation of perfluoropolyethers. See, for example, U.S. Pat. No. 5,268,405 to Ojakaar et al. Carbon black fillers are typically also employed in fluoropolymers as a means to balance modulus, tensile strength, elongation, hardness, abrasion resistance, conductivity, and processability of the compositions. Suitable examples include MT blacks (medium thermal black) designated N-991, N-990, N-908, and N-907; FEF N-550; and large particle size furnace blacks. When used, 1 to 100 parts filler per hundred parts fluoropolymer (phr) of large size particle black is generally sufficient.

Fluoropolymer fillers may also be present in the compositions. Generally, from 1 to 100 phr of fluoropolymer filler is used. The fluoropolymer filler can be finely divided and easily dispersed as a solid at the highest temperature used in fabrication and curing of the inventive composition. By solid, it is meant that the filler material, if partially crystalline, will have a crystalline melting temperature above the processing temperature(s) of the curable composition(s). A preferred way to incorporate fluoropolymer filler is by blending latices. This procedure, including various kinds of fluoropolymer filler, is described in U.S. Pat. No. 6,720,360 to Grootaert et al.

Conventional adjuvants may also be incorporated into the compound of the present invention to enhance the properties of the compound. For example, acid acceptors may be employed to facilitate the cure and thermal stability of the compound. Suitable acid acceptors may include magnesium oxide, lead oxide, calcium oxide, calcium hydroxide, dibasic lead phosphite, zinc oxide, barium carbonate, strontium hydroxide, calcium carbonate, hydrotalcite, alkali stearates, magnesium oxalate, or combinations thereof. The acid acceptors are preferably used in amounts ranging from about 1 to about 20 parts per 100 parts by weight of the polymer.

The following specific, examples will serve to illustrate the invention. In these examples, all amounts are expressed in parts by weight, or parts by weight per one hundred parts by weight of rubber (phr).

### Examples

### Example 1

In Example 1, a 80 liter reactor was charged with 52,000 grams of water, 40 grams of ammonium persulfate (APS, (NH₄)₂S₂O₈) and 160 grams of 50% aqueous solution of potassium phosphate dibasic (K₂HPO₄). The reactor was evacuated, the vacuum was broken and it was pressurized with nitrogen to 25 psi (0.17 MPa). This vacuum and pressurization was repeated three times. After removing oxygen, the reactor was heated to 80°C and pressurized to 74 psi (0.51 MPa) with a blend of hexafluoropropylene (HFP) 1,4-diiodooctafluorobutane and decafluoro-3-methoxy-4-trifluoromethyl-pentane. To prepare the blend of hexafluoropropylene (HFP), 1,4-diiodooctafluorobutane and HFE 7300, a 1-liter, stainless steel cylinder was evacuated and purged 3 times with N₂. After adding 1,4-diiodooctafluorobutane and HFE 7300 to the cylinder, HFP was added based on the amount of 1,4-diiodooctafluorobutane added. The blend was then attached to the reactor and was fed using a blanket of N₂. The blend contained 89.9 wt% of HFP, 2.5 wt% of 1,4-diiodooctafluorobutane and 7.6 wt% of HFE 7300. The reactor was then charged with vinylidene fluoride (VDF) and the above described blend of hexafluoropropylene (HFP), 1,4-diiodooctafluorobutane and HFE 7300, bringing reactor pressure to 220 psi (1.52 MPa). Total precharge of VDF and the blend of HFP, 1,4-diiodooctafluorobutane and HFE 7300 was 800 grams, and 1536 grams, respectively. The reactor was agitated at 450 rpm. As reactor pressure dropped due to monomer consumption in the polymerization reaction, the blend of hexafluoropropylene (HFP), 1,4-diiodooctafluorobutane and HFE 7300, and VDF was continuously fed to the reactor to maintain the pressure at 220 psi (1.52 MPa). The ratio of the blend and VDF was 0.651 by weight and no emulsifier was used for the polymerization. After 6.2 hours the monomer and blend feeds were discontinued and the reactor was cooled. The resulting dispersion had a solid content of 29.7 wt. % and a pH of 3.6. The dispersion particle size was 323 nm and total amount of dispersion was about 76,500 grams.

For the coagulation, 19.54 g of a mixture of 1 part by weight of NH₄OH and 25 parts by weight of deionized water was added to 942 g of the latex made as described above. The pH of the mixture was 6.7. This mixture was added to 2320 mL of a 5 wt% MgCl₂ in water solution. The crumb was recovered by filtering the coagulate through cheese cloth and gently squeezing to remove excess water. The crumb was returned to the coagulation vessel and rinsed with D.I. water a total of 3 times. After the final rinse and filtration, the crumb was dried in a 130 °C oven for 16 hours. The resulting fluoroelastomer raw gum had a Mooney viscosity of 4.9 at 100°C.

The fluoroelastomers by neutron activation analysis (NAA) analysis contained 0.63 wt% iodine. The fluoroelastomer by FT-IR analysis contained 80.2 mol% copolymerized units of VDF and 19.8 mol% HFP.

Viscoelastic properties were measured using a dynamic mechanical analyzer, RPA 2000 instrument (available from Alpha Technologies, Ohio, USA) in accordance with ASTM D 6204-07. The storage modulus (G') was measured at 10% strain and the frequency (ω) of 0.1 - 209 rad/sec. The temperature for these measurements was 25° C. The storage modulus (G') data of the raw gum at 0.1 rad/s and 6.3 rad/s (1 Hz) were 194 and 654 kPa, respectively.

Mooney viscosity or compound Mooney viscosity was determined in accordance with ASTM D1646-06 TYPE A by a MV 2000 instrument (available from Alpha Technologies, Ohio, USA) using large rotor (ML 1+10) at 100°C. Results are reported in Mooney units.

The minimum torque (ML) of the fluoroelastomer (raw gum) was measured at 150°C using an Alpha Technologies Rubber Process Analyzer with Moving Disk Rheometer (MDR, a sealed torsion shear rotorless curemeter) mode under the same conditions as cure rheology measurement as in Example 2. This ML was used as a control for the original fluoroelastomer viscosity without any scorch. The test results are summarized in Table 2.

**Table 2. Fluoroelastomers**

| Polymer | Mooney viscosity ML1+10 @100°C | Storage modulus @25°C G' (kPa) | | ML joule (0.113 inch-lb) @150°C |
|---|---|---|---|---|
| | | 0.1 (rad/s) | 6.3 (rad/s) | |
| Fluoroelastomer A | 4.9 | 194 | 654 | 0.009 |
| Fluoroelastomer B | 12 | 276 | 739 | 0.031 |
| Fluoroelastomer C | 96 | 348 | 656 | 2.103 |

### Example 2

A fluoroelastomer compound was prepared using a 7.62 cm (3-inch) two roll mill by compounding the fluoroelastomer prepared in Example 1 (Fluoroelastomer A) with 10 parts of silicone dioxide (available under the trade designation "Min-U-Sil" 5 µm from U. S. Silica Company, Berkeley Springs, WV), 3 parts of triallylisocyanurate (TAIC) coagent (98%, obtained under the trade designation "TAIC" from Nippon Kasei, Japan) and 2 parts of benzoyl peroxide (BP) (CAS RN 94-36-0), (available under the trade designation "Luperox" A98 from Aldrich, Milwaukee, WI). The compound (Compound I) is shown in Table 3.

The cure characteristics were measured using an Alpha Technologies Rubber Process Analyzer with Moving Disk Rheometer (MDR, a sealed torsion shear rotorless curemeter) mode under conditions corresponding to ASTM D5289-07. The frequency was 100 cpm and the strain was 0.5 degree. The following parameters were recorded:
ML: minimum torque level in unit of joule (0.113 inch-lb)
MH: maximum torque level in unit of joule (0.113 inch-lb).
Δ torque: difference between maximum torque (MH) and minimum torque (ML)
ts2: minutes to 0.23 joules (2 inch-lb) rise
t'50: minutes to 50% of Δ torque (50% cure time)
t'90: minutes to 90% of Δ torque (90% cure time)

The cure characteristics were summarized in Table 6.

The minimum torque (ML) of the compound at 150°C was used to determine the compound scorch state of the compound after compounding with ingredients. When the difference between ML of raw gum (MLraw) and ML of the compound (MLcomp.) is greater than 0.06 joules (0.5 inch-lb), the compound can be scorched during compounding. The result was summarized in Table 5.

Before adding ingredients of Compound I in Table 3 to Fluoroelastomer A, the temperature of the fluoroelastomer band on the two roll mill was measured to check the shear heat by mixing. The surface temperature of the two roll mill chilled by water stream was 25°C before start milling. The surface temperature of the fluoroelastomer after mixing for 2 minutes was 40.4°C. The polymer surface temperature and cure rheology were summarized in Table 5.

The compound was press-cured using a 15 X 7.5 cm, 2 mm thick mold at 130°C for 5 minutes. Then the press-cured sheet was post cured at 230°C for 4 hours. The dumbbells for physical properties were cut from the cured sheets with ASTM Die D. The press-cured and post-cured samples were tested for physical properties in accordance with ASTM D 412-06a. The test results are summarized in Table 4.

The compound was press-cured using a 214 O-ring (AMS AS568) mold at 110°C for 15 minutes. Then the press-cured O-rings were post cured at 230°C for 4 hours. The press-cured and post-cured O-rings were tested for compression set for 22 hours at 200°C in accordance with ASTM D 395-03 Method B and ASTM D 1414-94. Results are reported as percentages. The test results are summarized in Table 6.

**Table 3 Compound formulation (phr*)**

| | Compound I | Compound II | Compound III |
|---|---|---|---|
| Fluoroelastomer | 100 | 100 | 100 |
| Min-U-Sil® 5 µm | 10 | 10 | 10 |
| TAlC (98%) | 3 | 3 | 3 |
| Luperox ® A98 (benzoyl peroxide) | 2 | --- | --- |
| TBIC (75%) | --- | 1.9 | --- |
| DBPH (90%) | --- | --- | 2.7 |

| | | | |
|---|---|---|---|
| *phr; parts by weight per one hundred parts by weight of rubber | | | |

**Table 4. 90% cure time with peroxides**

| | Fluoroelastomer | Peroxide | 90% cure time, t'90 (min) | | |
|---|---|---|---|---|---|
| | | | 110°C | 130°C | 150°C |
| Ex. 2 | A | benzoyl peroxide | 9.7 | 1.2 | 0.5 |
| Co. Ex. 1 | A | TBIC | 149 | 8.3 | 1.3 |
| Co. Ex. 2 | A | DBPH | 940 | 52 | 3.8 |

The data in Table 4 show that the cure speed (90% cure time, t'90) of fluoroelastomer compound with benzoyl peroxide (Example 2) of this invention significantly faster than that of fluoroelastomer compound with TBIC or DBPH (Comparative Examples 1 and 2).

**Table 5. Polymer Surface Temp. vs. Compound Scorch**

| | Raw gum | | | Compound | |
|---|---|---|---|---|---|
| | Fluoroelastomer | Storage modulus ,G' (kPa) | Surface temp. (°C) | Peroxide | Scorch state factor |
| | | | | | ML_{comp.} - ML _{raw} joule (0.113 inch-lb) |
| Ex. 2 | A | 194 | 40 | benzoyl peroxide | 0.02 |
| Ex. 3 | B | 276 | 43 | benzoyl peroxide | 0.13 |
| Co. Ex. 3 | C | 348 | 48 | benzoyl peroxide | 0.53 |

The data in Table 5 show that the storage modulus of fluoroelastomer correlates with the polymer surface temperature when the fluoroelastomers are milled by two roll mill. As the storage modulus is increased, the polymer surface temperature is increased. After compounding with benzoyl peroxide in Examples 2 and 3, there was no significant change of the difference between the minimum torque of raw gum (ML_{raw}) and the minimum torque of the compound (ML_{comp.}). However, the scorch state factor (MLₑₒₘₚ. - ML_{raw}) in Comparative Example 3 was higher than compounds in Examples 2 and 3. This indicates that the compound in Comparative Example 3 was scorched due to the shear heat during mixing.

**Table 6. Compound Properties and Cured Compound Properties**

| | Ex.2 | Co. Ex. 1 | Co. Ex. 2 |
|---|---|---|---|
| Compound | I | II | III |
| Fluoroelastomer | A | A | A |
| Peroxide | BP | TBIC | DBPH |
| Cure rheology (6 min@177°C) | | | |
| Minimum torque, ML (in-lb) [joule] | (0.6)[0.07] | (0.1)[0.01] | (0.0)[0.0] |
| Maximum torque, MH (in-lb) [joule] | (10.1)[1.14] | (9.4)[1.06] | (8.1)[0.92] |
| Δ torque (MH-ML) (in-lb) [joule] | (9.5)[1.07] | (9.4)[1.06] | (8.1)[0.92] |
| Time to 5.08 cm (2 inch-lb) rise, ts2 (min) | 0.2 | 0.3 | 0.5 |
| Time to 50% cure, t'50 (min) | 0.3 | 0.4 | 0.5 |
| Time to 90% cure, t'90 (min) | 0.3 | 0.5 | 0.6 |
| Tan delta ML (in-lb)[joule] | (0.5)[0.06] | (2.2)[0.25] | (10.5)[1.19] |
| Tan delta MH (in-lb) [joule] | (0.06)[0.01] | (0.084)[0.01] | (0.085)[0.01] |
| Cure rheology (12min@150°C) | | | |
| Minimum torque, ML (in-lb) [joule] | (0.01)[0.01] | (0.0)[0.0] | (0.0)[0.0] |
| Maximum torque, MH (in-lb) [joule] | (10.6)[1.20] | (9.8)[1.11] | (8.6)[0.97] |
| A torque (MH-ML) (in-lb) [joule] | (10.5)[1.19] | (9.7)[1.10] | (8.6)[0.97] |
| Time to 5.08 cm (2 inch-lb)rise, ts2 (min) | 0.3' | 0.7 | 1.5 |
| Time to 50% cure, t'50 (min) | 0.4 | 0.8 | 2.0 |
| Time to 90% cure, t'90 (min) | 0.5 | 1.3 | 3.8 |
| Tan delta ML (in-lb) [joule] | (2.4)[0.27] | (11.7)[1.32] | (8.8)[0.99] |
| Tan delta MH (in-lb) | (0.073)[0.01] | (0.089)[0.01] | (0.098)[0.01] |
| Cure rheology (130°C) | | | |
| Minimum torque, ML (in-lb)[joule] | (0.0 )[0.0] | (0.0 )[0.0] | (0.0)[0.0] |
| Maximum torque, MH (in-lb) [joule] | (11.0)[1.24] | (10.2)[1.15] | (9.0)[1.02] |
| Δ torque (MH-ML) (in-lb)[joule] | (11.0)[1.24] | (10.2)[1.15] | (9.0)[1.02] |
| Time to 5.08 cm (2 inch-lb)rise, ts2 (min) | 0.6 | 2.6 | 13.0 |
| Time to 50% cure, t'50 (min) | 0.8 | 4.0 | 22.7 |
| Time to 90% cure, t'90 (min) | 1.2 | 8.3 | 51.6 |
| Tan delta ML (in-lb) [joule] | (4.4)[0.50] | (8.2)[0.93] | (6.9)[0.78] |
| Tan delta MH (in-lb) [joule] | (0.08)[0.10] | (0.106)[0.01] | (0.17)[0.01] |
| Cure rheology (110°C) | | | |
| Minimum torque, ML (in-lb) [joule] | (0.0)[0.0] | (0.0)[0.0] | (0.0)[0.0] |
| Maximum torque, MH (in-lb) [joule] | (11.7)[1.32] | (10.1)[1.14] | (7.7)[0.87] |
| Δ torque (MH-ML) (in-lb) [joule] | (11.7)[1.32] | (10.1)[1.14] | (7.7)[0.87] |
| Time to 5.08cm (2-inch-lb)rise, ts2 (min) | 2.2 | 20.5 | 212 |
| Time to 50% cure, t'50 (min) | 3.9 | 43.1 | 380 |
| Time to 90% cure, t'90 (min) | 9.7 | 149.2 | 940 |
| Tan delta ML (in-lb) [joule] | (4.1)[4.63] | (4.8)[0.54] | (3.8)[0.43] |
| Tan delta MH (in-lb) [joule] | (0-087)[0.01] | (0.098)[0.01] | (6.13)[0.01] |
| Cure rheology (90°C) | | | |
| Minimum torque, ML (in-lb) [joule] | (0.2)[0.02] | --- | --- |
| Maximum torque, MH (in-lb) [joule] | (9,7)[1.10] | --- | --- |
| Δ torque (MH-ML) (in-lb)[joule] | (9.5)[1.07] | --- | --- |
| Time to 5.08cm (2 inch-lb) rise, ts2 (min) | 16.9 | --- | --- |
| Time to 50% cure, t'50 (min) | 33.5 | --- | --- |
| Time to 90% cure, t'90 (min) | 107 | --- | --- |
| Tan delta ML (in-lb) [joule] | (2.6)[0.29] | --- | --- |
| Tan delta MH (in-lb) [joule] | (0.158)[0.018] | --- | --- |
| Cure rheology (70°C) | | | |
| Minimum torque, ML (in-lb) [joule] | (0.6)[0.07] | --- | --- |
| Maximum torque, MH (in-lb)[joule] | (9.0)[1.02] | --- | --- |
| Δ torque | (8.4)[0.95] | --- | --- |
| Time to 5.08cm (2 inch-lb)rise, ts2 (min) | 170 | --- | --- |
| Time to 50% cure, t'50 (min) | 330 | --- | --- |
| Time to 90% cure, t'90 (min) | 819 | --- | --- |
| Tan delta ML (in-lb) [joule] | --- | --- | --- |
| Tan delta MH (in-lb) [joule] | --- | --- | --- |
| Physical Properties | | | |
| 5 min. press cure temp. (°C) | 130 | 150 | 177 |
| Tensile, psi | 1320 | 661 | 193 |
| Elongation at break, % | 305 | 300 | 164 |
| 100% Modulus, psi | 230 | 190 | 153 |
| Hardness, Shore A | 53 | 52 | 46 |
| Post Cure, 4 hours @ 232°C | | | |
| Tensile, psi | 1357 | 1113 | 228 |
| Elongation at break, % | 296 | 327 | 151 |
| 100% Modulus, psi | 244 | 219 | 178 |
| Hardness, Shore A | 55 | 55 | 55 |
| Compression set (22 hours@200°C) | | | |
| Press cure (%) | 28.7 | 26.5 | 33.1 |
| Post cure (%) | 17.8 | 17.1 | 22.9 |

### Comparative Example 1

In Comparative Example 1, the compound sample was prepared as in Example 2 except 1.9 parts of 75% active t-butyl peroxy-isopropyl-carbonate (TBIC) in isododecane solution (available under the trade designation "Trigonox" BPIC from Acros Organics USA, Morris Plains, NJ) was used instead of 2 parts of benzoyl peroxide. The compound formulation is Formulation II in Table3. The amount of TBIC is the same molar equivalent to 2 parts of benzoyl peroxide. The compound was press-cured for testing physical properties and O-ring compression set at 150°C for 5 minutes and then post-cured at 230°C for 4 hours. The test results are summarized in Tables 4 and 6.

The compound was press-cured using a 15 X 7.5 cm, 2 mm thick mold at 130°C for 5 minutes. Then the press-cured sheet was post cured at 230°C for 4 hours.

### Comparative Example 2

In Comparative Example 2, the compound sample was prepared and tested as in Example 2 except 2.7 parts of 90% active 2,5-dimethyl-2,5-di(t-butylperoxy)hexane (DBPH) (available under the trade designation "Luperox" 101 from Aldrich, Milwaukee, WI) was used instead of 2 parts of benzoyl peroxide. The compound formulation is Formulation III in Table3. The amount of DBPH is the same molar equivalent to 2 parts of benzoyl peroxide. The compound was press-cured for testing physical properties and O-ring compression set at 177°C for 5 minutes and then post-cured at 230°C for 4 hours. After the press cure a lot of blisters were observed on the press-cured sheet. The test results are summarized in Tables 4 and 6.

### Example 3

In Example 3, the compound sample was prepared and tested as in Example 2 except peroxide curable Fluoroelastomer B in Table 2 was used as the fluoroelastomer. Fluoroelastomer B was polymerized as Example 1 except the blend contained 90.6 wt% of HFP, 2.3 wt% of 1,4-diiodooctafluorobutane and 7.1 wt% of HFE 7300. The fluoroelastomer by FT-IR analysis contained 80.1 mol% copolymerized units of VDF and 19.9 mol% HFP. Mooney viscosity (ML1+10 @100°C) of the raw gum was 12.2. For the mixing ingredients the surface temperature of the two roll mill chilled by water stream was 25°C before start milling. The surface temperature of the fluoroelastomer after mixing for 2 minutes was 43°C. The test results are summarized in Tables 5 and 7.

### Comparative Example 3

In Comparative Example 3, Fluoroelastomer C (available as FC 2260 form Dyneon LLC Oakdale, MN) was used as the fluoroelastomer as in Table 3 (Formulation I). Mooney viscosity (ML1+10 @ 100°C) of the raw gum was 95.9. The bromine content by NAA was 0.24 wt%. For the mixing ingredients the surface temperature of the two roll mill chilled by water stream was 25°C before start milling. The surface temperature of the fluoroelastomer after mixing for 2 minutes was 47°C. The test results are summarized in Tables 5 and 7.

### Comparative Example 4

In Comparative Example 4, the compound sample was prepared and tested as in Comparative Example 3 except 1.9 parts of 75% active t-butyl peroxy-isopropyl-carbonate (TBIC) in isododecane solution was used instead of 2 parts of benzoyl peroxide (Formulation II in Table 3). The test results are summarized in Tables 5 and 7.

**Table 7. Compound Properties and Cured Compound Properties**

| | Ex. 3 | Co. Ex. 3 | Co. Ex. 4 |
|---|---|---|---|
| Compound | I | I | II |
| Fluoroelastomer | B | C | C |
| Peroxide | BP | BP | TBIC |
| Cure rheology (6 min@177°C) | | | |
| Minimum torque, ML (in-lb)[joule] | (0.5)[0.06] | (3.1)[0.36] | (1.8)[0.20] |
| Maximum torque, MH (in-lb)[joule] | (9.7)[1.10] | (6.3)[0.71] | (5.3)[0.60] |
| Δ torque (MH-ML)(in-lb)[joule] | (9.2)[1.04] | (3.2)[0.36] | (3.5)[0.40] |
| Time to 5.08cm (2 inch-lb) rise, ts2 (min) | 0.2 | 0.3 | 0.5 |
| Time to 50% cure, t'50 (min) | 0.3 | 0.3 | 0.5 |
| Time to 90% cure, t'90 (min) | 0.4 | 0.3 | 0.6 |
| Tan delta ML (in-lb)[joule] | (0.9)[0.10] | (0.4)[0.05] | (0.6)[0.07] |
| Tan delta MH (in-lb)[joule] | (0.088)[0.010] | (0.116)[0.01] | (0.159)[6.02] |
| Cure rheology (12min@150°C) | | | |
| Minimum torque, ML (in-lb)[joule] | (0.2)[0.02] | (2.6)[0.29] | (1.8)[0.20] |
| Maximum torque, MH (in-lb)[joule] | (10.5)[1.19] | (6.7)[0.76] | (5.2)[0.59] |
| Δ torque (MH-ML) (in-lb)[joule] | (10.4)[1.18] | (4.1)[0.46] | (3.4)[0.38] |
| Time to 5.08cm inch-lb) rise, ts2 (min) | 0.4 | 0.4 | 1.7 |
| Time to 50% cure, t'50 (min) | 0.5 | 0.4 | 1.4 |
| Time to 90% cure, t'90 (min) | 0.6 | 0.6 | 3.1 |
| Tan delta ML (in-lb) [joule] | (2.3)[0.26] | (0.4)[0.05] | (0.5)[0.06] |
| Tan delta MH (in-lb) [joule] | (0.077)[0.01] | (0.12)[0.01] | (0.18)[0.02] |

## Claims

1. A composition comprising:
(a) an amorphous peroxide curable fluoropolymer comprising an iodine, bromine or chlorine containing cure site;
(b) an organic peroxide with a 10-hour half life temperature below 90°C; and
(c) a coagent,
wherein the amorphous fluoropolymer has a storage modulus at 25°C and 0.1 rad/s of less than or equal to 300 kPa,
wherein the fluoropolymer 90% cure time as measured by sealed torsion shear rotorless curemeter in ASTM D5289-07 is less than 30 minutes at 110°C.

2. The composition according to claim 1 wherein the amorphous fluoropolymer has a storage modulus at 25°C and 0.1 rad/s of greater than or equal to 100 kPa.

3. The composition according to claim 1 wherein the fluoropolymer comprises interpolymerized units derived from monomers selected from the group consisting of tetrafluoroethylene, vinylidene fluoride, hexafluoropropylene, ethylene, propylene, perfluoro(alkylvinylether), perfluoro(allylether), chlorotrifluoroethylene, vinylfluoride and trifluoroethylene.

4. The composition according to claim 1 wherein the organic peroxide is present at 0.1 phr to 5 phr.

5. The composition according to claim 1 wherein the coagent is selected from tri(methyl)allyl isocyanurate, triallyl isocyanurate, tri(methyl)allyl cyanurate, poly-triallyl isocyanurate, xylylene-bis(diallyl isocyanurate), N,N'-m-phenylene bismaleimide, diallyl phthalate, tris(diallylamine)-s-triazine, triallyl phosphite, 1,2-polybutadiene, ethyleneglycol diacrylate, diethyleneglycol diacrylate, and compounds having the formula CH₂=CH-R_{f1}CH=CH₂, wherein Rn may be a perfluoroalkylene of 1 to 8 carbon atoms.

6. The composition according to claim 1 comprising from 1 wt% to 10 wt% of the coagent.

7. The composition according to claim 1 wherein the organic peroxide is selected from the group consisting of t-hexyl peroxy-2-ethylhexanoate, t-butyl peroxy-2-ethylhexanoate, di(4-methylbenzoyl) peroxide, benzoyl peroxide, and combinations thereof.

8. The composition according to claim 1 wherein the cure site is an end group.

9. The composition according to claim 1 wherein the weight percent of iodine, bromine or chlorine ranges from 0.2 to 2 based on the total weight of the fluoropolymer.

10. The composition of claim 1 wherein the iodine is derived from an iodinated chain transfer agent.

11. The composition of claim 1 wherein the bromine is derived from a brominated chain transfer agent.

12. The composition of claim 1 wherein the chlorine is derived from a chlorinated chain transfer agent.

13. The composition of claim 10 wherein the chain transfer agent is a perfluorinated iodo-compound.

14. The composition of claim 11 wherein the chain transfer agent is a perfluorinated bromo-compound.

15. The composition of claim 12 wherein the chain transfer agent is a perfluorinated chloro-compound.

16. The composition of claim 1 wherein the fluoropolymer has a Mooney viscosity of 12 or less (ML 1+10) at 100°C according to ASTM D1646-06 TYPE A.

17. A cure in place process comprising the steps of:
(a) providing a substrate;
(b) positioning on the substrate a composition according to claim 1; and
(c) curing the composition, wherein the fluoropolymer 90% cure time as measured by sealed torsion shear rotorless curemeter in ASTM D5289-07 is less than 30 minutes at 110°C.

18. A cure in place article derived from a composition according to claim 1.

## Patentansprüche

1. Zusammensetzung, umfassend:
(a) ein amorphes peroxidhärtbares Fluorpolymer, umfassend eine lod, Brom oder Chlor enthaltende Härtungsstelle;
(b) ein organisches Peroxid mit einer 10-Stunden-Halbwertszeit-Temperatur von unter 90 °C; und
(c) einen Co-Wirkstoff,
wobei das amorphe Fluorpolymer einen Speichermodul bei 25 °C und 0,1 rad/s von weniger als oder gleich 300 kPa aufweist,
wobei die Fluorpolymer 90% Härtungszeit gemessen mittels eines geschlossenen rotorlosen Vulkameters mit Torsionsscherung in ASTM D5289-07 weniger als 30 Minuten bei 110 °C beträgt.

2. Zusammensetzung nach Anspruch 1, wobei das amorphe Fluorpolymer einen Speichermodul bei 25 °C und 0,1 rad/s von mehr als oder gleich 100 kPa aufweist.

3. Zusammensetzung nach Anspruch 1, wobei das Fluorpolymer interpolymerisierte Einheiten umfasst, die aus Monomeren abgeleitet sind, die ausgewählt sind aus der Gruppe, bestehend aus Tetrafluorethylen, Vinylidenfluorid, Hexafluorpropylen, Ethylen, Propylen, Perfluor(alkylvinylether), Perfluor(allylether), Chlortrifluorethylen, Vinylfluorid und Trifluorethylen.

4. Zusammensetzung nach Anspruch 1, wobei das organische Peroxid zu 0,1 phr bis 5 phr vorhanden ist.

5. Zusammensetzung nach Anspruch 1, wobei der Co-Wirkstoff ausgewählt ist aus Tri(methyl)allylisocyanurat, Triallylisocyanurat, Tri(methyl)allylcyanurat, Polytriallylisocyanurat, Xylylen-bis(diallylisocyanurat), N,N'-m-Phenylenbismaleimid, Diallylphthalat, Tris(diallylamin)-s-triazin, Triallylphosphit, 1,2-Polybutadien, Ethylenglycoldiacrylat, Diethylenglycoldiacrylat und Verbindungen mit der Formel CH₂=CH-R_{f1}CH=CH₂, worin R_{f1} ein Perfluoralkylen mit 1 bis 8 Kohlenstoffatomen sein kann.

6. Zusammensetzung nach Anspruch 1, umfassend 1 Gew.-% bis 10 Gew.-% des Co-Wirkstoffs.

7. Zusammensetzung nach Anspruch 1, wobei das organische Peroxid ausgewählt ist aus der Gruppe, bestehend aus t-Hexylperoxy-2-ethylhexanoat, t-Butylperoxy-2-ethylhexanoat, Di(4-methylbenzoyl)peroxid, Benzoylperoxid und Kombinationen davon.

8. Zusammensetzung nach Anspruch 1, wobei die Härtungsstelle eine Endgruppe ist.

9. Zusammensetzung nach Anspruch 1, wobei die Gewichtsprozent von lod, Brom oder Chlor im Bereich von 0,2 bis 2, basierend auf dem Gesamtgewicht des Fluorpolymers, liegen.

10. Zusammensetzung nach Anspruch 1, wobei das lod von einem iodierten Kettenüberträger abgeleitet ist.

11. Zusammensetzung nach Anspruch 1, wobei das Brom von einem bromierten Kettenüberträger abgeleitet ist.

12. Zusammensetzung nach Anspruch 1, wobei das Chlor von einem chlorierten Kettenüberträger abgeleitet ist.

13. Zusammensetzung nach Anspruch 10, wobei der Kettenüberträger eine perfluorierte lodverbindung ist.

14. Zusammensetzung nach Anspruch 11, wobei der Kettenüberträger eine perfluorierte Bromverbindung ist.

15. Zusammensetzung nach Anspruch 12, wobei der Kettenüberträger eine perfluorierte Chlorverbindung ist.

16. Zusammensetzung nach Anspruch 1, wobei das Fluorpolymer eine Mooney-Viskosität von 12 oder weniger (ML 1 + 10) bei 100 °C gemäß ASTM D1646-06 TYP A aufweist.

17. Verfahren zur Vor-Ort-Härtung, umfassend die folgenden Schritte:
(a) Bereitstellen eines Substrats;
(b) Positionieren einer Zusammensetzung nach Anspruch 1 auf dem Substrat; und
(c) Härten der Zusammensetzung, wobei die Fluorpolymer 90% Härtungszeit gemessen mittels eines geschlossenen rotorlosen Vulkameters mit Torsionsscherung in ASTM D5289-07 weniger als 30 Minuten bei 110 °C beträgt.

18. Vor-Ort-Aushärtungsartikel, abgeleitet von einer Zusammensetzung nach Anspruch 1.

## Revendications

1. Composition comprenant :
(a) un fluoropolymère amorphe durcissable au peroxyde comprenant un site de durcissement contenant de l'iode, du brome ou du chlore ;
(b) un peroxyde organique avec une température de demi-vie à 10 heures inférieure à 90 °C ; et
(c) un co-agent,
dans laquelle le fluoropolymère amorphe a un module de conservation à 25 °C et 0,1 rad/s inférieur ou égal à 300 kPa,
dans laquelle le temps de durcissement à 90 % du fluoropolymère tel que mesuré par un rhéomètre scellé sans rotor à cisaillement par torsion selon ASTM D5289-07 est inférieur à 30 minutes à 110 °C.

2. Composition selon la revendication 1, dans laquelle le fluoropolymère amorphe a un module de conservation à 25 °C et 0,1 rad/s supérieur ou égal à 100 kPa.

3. Composition selon la revendication 1, dans laquelle le fluoropolymère comprend des motifs interpolymérisés dérivés de monomères choisis dans le groupe constitué de tétrafluoroéthylène, fluorure de vinylidène, hexafluoropropylène, éthylène, propylène, perfluoro(alkylvinyléther), perfluoro(allyléther), chlorotrifluoroéthylène, fluorure de vinyle et trifluoroéthylène.

4. Composition selon la revendication 1, dans laquelle le peroxyde organique est présent à 0,1 pcr (parties pour cent de résine) à 5 pcr.

5. Composition selon la revendication 1, dans laquelle le co-agent est choisi parmi l'isocyanurate de tri(méthyl)allyle, l'isocyanurate de triallyle, le cyanurate de tri(méthyl)allyle, l'isocyanurate de poly-triallyle, le xylylène-bis(isocyanurate de diallyle), le N,N'-m-phénylène bismaléimide, le phtalate de diallyle, la tris(diallylamine)-s-triazine, la phosphite de triallyle, le 1,2-polybutadiène, le diacrylate d'éthylène glycol ; le diacrylate de diéthylène glycol, et des composés de formule CH₂-CH-R_{f1}CH=CH₂, dans laquelle R_{f1} peut être un perfluoroalkylène de 1 à 8 atomes de carbone.

6. Composition selon la revendication 1, comprenant de 1 % en poids à 10 % en poids du co-agent.

7. Composition selon la revendication 1, dans laquelle le peroxyde organique est choisi dans le groupe constitué de t-hexyl peroxy-2-éthylhexanoate, t-butyl peroxy-2- éthylhexanoate, peroxyde de di(4-méthylbenzoyl), peroxyde de benzoyle, et leurs combinaisons.

8. Composition selon la revendication 1, dans laquelle le site de durcissement est un groupe terminal.

9. Composition selon la revendication 1, dans laquelle le pourcentage en poids d'iode, de brome ou de chlore va de 0,2 à 2 sur base du poids total du fluoropolymère.

10. Composition selon la revendication 1, dans laquelle l'iode est dérivé d'un agent de transfert de chaîne iodé.

11. Composition selon la revendication 1, dans laquelle le brome est dérivé d'un agent de transfert de chaîne bromé.

12. Composition selon la revendication 1, dans laquelle le chlore est dérivé d'un agent de transfert de chaîne chloré.

13. Composition selon la revendication 10, dans laquelle l'agent de transfert de chaîne est un composé iodo perfluoré.

14. Composition selon la revendication 11, dans laquelle l'agent de transfert de chaîne est un composé bromo perfluoré.

15. Composition selon la revendication 12, dans laquelle l'agent de transfert de chaîne est un composé chloro perfluoré.

16. Composition selon la revendication 1, dans laquelle le fluoropolymère a une viscosité Mooney de 12 ou moins (ML 1+10) à 100 °C selon ASTM D1646-06 TYPE A.

17. Procédé de durcissement sur place comprenant les étapes consistant à :
(a) fournir un substrat ;
(b) positionner sur le substrat une composition selon la revendication 1 ; et
(c) durcir la composition, dans lequel le temps de durcissement à 90 % du fluoropolymère tel que mesuré par un rhéomètre scellé sans rotor à cisaillement par torsion selon ASTM D5289-07 est inférieur à 30 minutes à 110 °C.

18. Article à durcissement sur place dérivé d'une composition selon la revendication 1.
